# EUROPEAN PATENT SPECIFICATION

(11) **EP 4 370 614 B1**
(45) Date of publication and mention of the grant of the patent: **11.03.2026**
(21) Application number: 21949716.1
(22) Date of filing: 16.07.2021
(51) Int. Cl.: C09D 17/00, C08G 65/26, C09D 11/102, C09D 11/037, C09D 11/326

(54) **DISPERSANTS FOR THE WATER-BORNE DISPERSION OF PIGMENTS, COMPOSITION THEREOF, AND THE METHOD FOR PREPARING THE SAME**
DISPERGIERMITTEL FÜR WÄSSRIGE PIGMENTDISPERSION, ZUSAMMENSETZUNG DARAUS UND VERFAHREN ZU IHRER HERSTELLUNG
DISPERSANTS POUR LA DISPERSION AQUEUSE DE PIGMENTS, COMPOSITION DE CEUX-CI, ET LEUR PROCÉDÉ DE PRÉPARATION

(43) Date of publication of application: 22.05.2024
(73) Proprietor: Clariant International Ltd., 4132 Muttenz (CH)
(72) Inventor: LIU, Tingwu, Suzhou, Jiangsu 215011 (CN); LIU, Xiaochi, Shanghai 200237 (CN); NIU, Lin, Shanghai 201600 (CN)
(74) Representative: Zusammenschluss Clariant
(86) International application number: PCT/CN2021/106760
(87) International publication number: WO 2023/283932

(56) References cited:
- EP-A1- 3 822 324
- EP-B1- 3 074 443
- WO-A1-2017/116734
- CN-A- 1 494 564
- CN-A- 101 712 857
- CN-A- 111 607 247
- JP-A- 2014 156 501
- US-A1- 2017 002 213
- US-A1- 2017 233 604

## Description

### FIELD OF THE INVENTION

The present invention relates to dispersants used for the water-borne dispersion of pigments, pigment composition, and the method for preparing the same.

### BACKGROUND OF THE INVENTION

Dispersing pigments in liquid media typically requires dispersants. Dispersants can be of anionic, cationic, amphoteric or neutral structure. They can be of low molecular weight, represent high molecular weight polymers which constitute a random, alternating, blocklike, comb-like or star-shaped architecture of the polymerized monomers.

Examples of where dispersants are of particular commercial importance are the dispersing of pigments in the manufacture of pigment concentrates (used for coloration of emulsion and varnish colors, paints, coatings and printing inks) and also the coloration of paper, cardboard and textiles.

In water-based pigment preparation, it is crucial to keep pigment particles well dispersed throughout manufacture, storage, application, and film formation. Thus, dispersants are necessary to stabilize the colloidal dispersion system and avoid the flocculation and coagulation.

In general, the surface of organic and inorganic pigments is hydrophobic, thus, it is desirable that the dispersants applied for waterborne dispersion of pigments is compatible with both water and the hydrophobic surface of pigments. For the consideration of cost and binding affinity to the hydrophobic surface of pigments, alkylphenols are commonly used as the hydrophobic moiety of pigment dispersants. For example, para-alkylphenol ethoxylates (APEOs) have been reported as dispersing additives for pigment (J. Bielmann, Polymers Paint Colour Journal 3 (1995) 17).

However, such dispersing additives contain as a consequence of their process of production residues of alkylphenols, frequently nonylphenol, and ethoxylates thereof. Since alkylphenol ethoxylates, or their degradation products accumulate as they almost don't degrade in the environment. This is problematic in that alkylphenol ethoxylates, or their degradation products have a hormonal effect on aquatic organisms. Therefore, many countries have adopted legislation (2003/53/EC for example) which limits or bans the use of materials containing alkylphenols (APEO) or their ethoxylates in open-loop systems. Polymeric dispersants are also widely used for pigments dispersants, for example, JP4,758,336B2 discloses the use of a light-stabilized polymer as dispersant in pigment dispersion and US5,085,698 discloses a block copolymeric dispersant for inkjet. However, the cost of such copolymeric dispersant is relatively high compared with alkylphenol based dispersants. Additionally,

US2017002213 might be cited as prior art. Therefore, it would be advantageous to develop new dispersants which are APEO-free and which can balance the environment and cost considerations with comparable dispersing performance.

### SUMMARY OF THE INVENTION

In a first aspect, the present invention provides a pigment dispersant of formula (I): 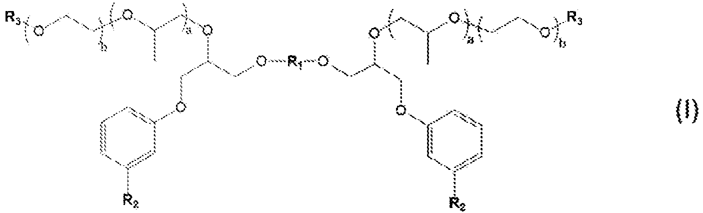
wherein R₁ is an aromatic or araliphatic or aliphatic hydrocarbyl radical;
R₂ is aliphatic hydrocarbyl radical; a is a number from 0 to 20; b is a number from 5 to 50; and R₃ is one of following atoms or groups: hydrogen, sulfuric acid group, phosphate group, or sulfosuccinate group.

In a second aspect, the present invention provides a pigment composition comprising:
(A) at least one organic base pigment;
(B) at least one pigment dispersant of the general formula (I): 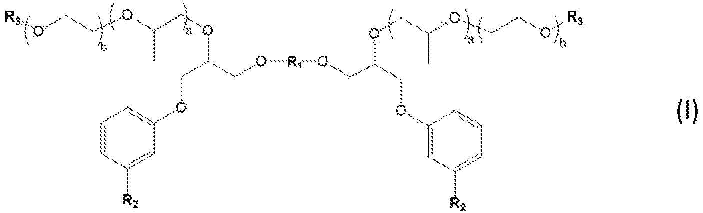
   wherein R₁ is an aromatic or araliphatic or aliphatic hydrocarbyl radical;
   R₂ is aliphatic hydrocarbyl radical of the formula: C₁₅H₃₁₋ₘ, in which m is 0, 2, 4 or 6;
   a is number from 0 to 20;
   b is number from 5 to 50;
   R₃ represents one of following atoms or groups: hydrogen, sulfuric acid group, phosphate group, or sulfosuccinate group;
(C) at least one solvent comprising water; and
(D) optional auxiliary.

In a third aspect, the present invention provides a method for preparing a pigment composition. The method includes the step of mixing pigment dispersant (B) as defined above in the form of powder, granulate or aqueous presscake in the presence of water as stated in above paragraph with at least one organic pigment (A) during a preparation process to form the pigment composition.

In a fourth aspect, the present invention provides a pigmented, natural or synthetic high molecular mass organic material comprising the pigment composition as defined above, wherein the natural or synthetic high molecular mass organic material is selected from the group consisting of plastics, resins, varnishes, paints, electrophotographic toners and developers, and inks.

### DETAILED DESCRIPTION OF THE INVENTION

In a first aspect, the present invention provides a pigment dispersant of formula (I): 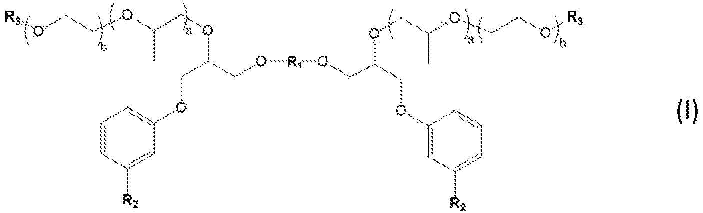
wherein R₁ is an aromatic or araliphatic or aliphatic hydrocarbyl radical;
R₂ is aliphatic hydrocarbyl radical;
a is a number from 0 to 20;
b is a number from 5 to 50; and
R₃ is one of following atoms or groups: hydrogen, sulfuric acid group, phosphate group, or sulfosuccinate group.

As an exemplary embodiment, a is a number from 0 to 20 and b is a number from 10 to 30. As an exemplary embodiment, b is a number from 10 to 50, preferably b is a number from 10 to 40, more preferably b is a number from 10 to 30, most preferably b is a number from 15 to 25. As an exemplary embodiment, R₃ is hydrogen, a is a number from 0 to 10, and b is a number from 10 to 40. As an exemplary embodiment, R₁ is an aromatic or araliphatic or aliphatic hydrocarbyl radical having 2 to 60 carbon atoms optionally containing one or more of the heteroatoms N, O and S.

As an exemplary embodiment, R₂ is of the formula: C₁₅H₃₁₋ₘ, in which m is 0, 2, 4 or 6, or R₂ is alkyl of the formula: CₙH₂ₙ₊₁, or R₂ is aliphatic hydrocarbyl radical of the formula CₙH₂ₙ₋₁ or CₙH₂ₙ₋₃, or CₙH₂ₙ₋₅, in which n is 4 to 20.

As an exemplary embodiment, the molecular weight of the pigment dispersant is between 500 g/mol and 20,000 g/mol, more preferably, between 1000 g/mol and 15,000 g/mol, more preferably, between 2000 g/mol and 10,000 g/mol.

In a second aspect, the present invention provides a pigment composition comprising: -(A) at least one organic base pigment;
- (B) at least one pigment dispersant of the general formula (I): 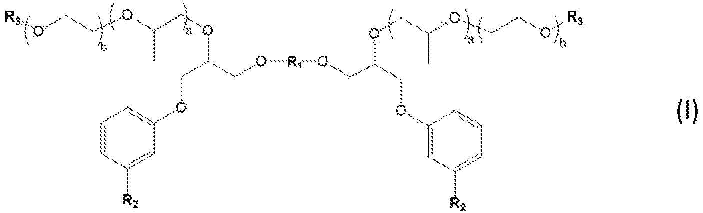 wherein R₁ is an aromatic or araliphatic or aliphatic hydrocarbyl radical; R₂ is aliphatic hydrocarbyl radical of the formula: C₁₅H₃₁₋ₘ, in which m is 0, 2, 4 or 6; a is number from 0 to 20; b is number from 5 to 50; R₃ represents one of following atoms or groups: hydrogen, sulfuric acid group, phosphate group, or sulfosuccinate group;
- (C) at least one solvent comprising water; and
- (D) optional auxiliary.

Component (A) is at least one organic base pigment. Suitable organic pigments for the presentation invention may include monoazo, disazo, laked azo, β -naphthol, Naphthol AS, benzimidazolone, disazo condensation, azo metal complex pigments or polycyclic pigments such as, for example, the phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or carbon blacks.

An exemplary selection of particularly preferred organic pigments includes carbon black pigments, for example lamp or furnace blacks. Monoazo and disazo pigments, in particular the Colour Index pigments Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 or Pigment Brown 41; β -naphthol and Naphthol AS pigments, in particular the Colour Index pigments Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 or Pigment Brown 1; laked azo and metal complex pigments, in particular the Colour Index pigments Pigment Red 48:2, Pigment Red 48:3, Pigment Red 48:4, Pigment Red 57: 1, Pigment Red 257, Pigment Orange 68 or Pigment Orange 70; benzimidazoline pigments, in particular the Colour Index pigments Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 or Pigment Brown 25; isoindolinone and isoindoline pigments, in particular the Colour Index pigments Pigment Yellow 139 or Pigment Yellow 173; phthalocyanine pigments, in particular the Colour Index pigments Pigment Blue 15, Pigment Blue 15: 1, Pigment Blue 15:2, Pigment Blue 15:3, Pigment Blue 15:4, Pigment Blue 15:6, Pigment Blue 16, Pigment Green 7 or Pigment Green 36; anthanthrone, anthraquinone, quinacridone, dioxazine, indanthrone, perylene, perinone and thioindigo pigments, in particular the Colour Index pigments Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 or Pigment Orange 43; triarylcarbonium pigments, in particular the Colour Index pigments Pigment Red 169, Pigment Blue 56 or Pigment Blue 61; diketopyrrolopyrrole pigments, in particular the Colour Index pigments Pigment Red 254, Pigment Red 255, Pigment Red 264, Pigment Red 270, Pigment Red 272, Pigment Orange 71, Pigment Orange 73, Pigment Orange 81, Pigment Carbon Black 7.

As an exemplary embodiment, the weight percentage of the organic base pigment is from 1% to 60%, preferably from 5% to 50%, more preferably from 10% to 50%, more preferably from 20% to 45%.

Component (B) is the pigment dispersant of formula (I): 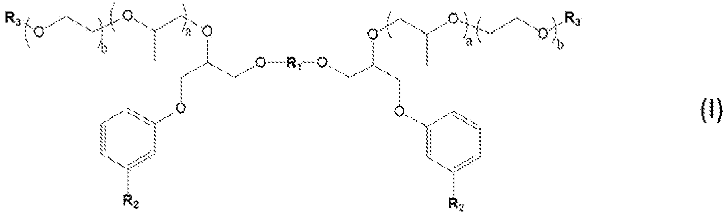
wherein R₁ is an aromatic or araliphatic or aliphatic hydrocarbyl radical;
R₂ is aliphatic hydrocarbyl radical of the formula: C₁₅H₃₁₋ₘ, in which m is 0, 2, 4 or 6; a is a number from 0 to 20; b is a number from 5 to 50; and
R₃ is one of following atoms or groups: hydrogen, sulfuric acid group, phosphate group, or sulfosuccinate group.

The dispersants of the present invention are produced by either reacting diglycidyl ethers with cardanol or reacting diols with cardanol glycidyl ether to produce intermediates with backbone structure of the formula (II), then alkoxylation is conducted to generate the hydrophilic groups. Alkoxylation is a chemical reaction that involves the addition of ethylene oxide or propylene oxide of intermediates. As one embodiment of the invention, ethylene oxide is reacted with intermediates to form final dispersants of the invention. As one embodiment of the invention, ethylene oxide and propylene oxide are reacted with intermediates to form final dispersants of the invention in which R₁ is an aromatic or araliphatic or aliphatic hydrocarbyl radical, R₂ is aliphatic hydrocarbyl radical.

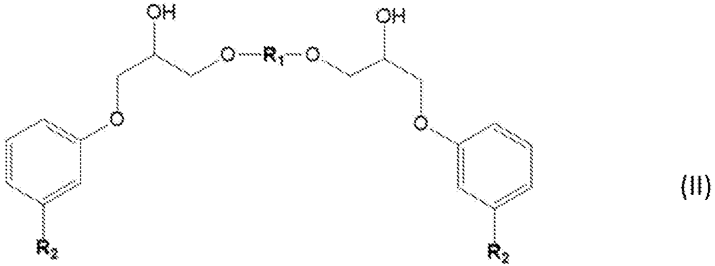

The amount of ethylene oxide and propylene oxide are in the range of 5-50 and 0-20 (mol ratio to the intermediate) respectively. As one embodiment of the invention, the amount of ethylene oxide and are in the range from 10 to 40, more preferably from 15 to 35, more preferably from 20 to 30 (mol ratio to the intermediate), and the amount of propylene oxide is in the range from 0 to 10 (mol ratio to the intermediate).

As one embodiment of the invention, suitable diglycidyl ethers include but not limited to bisphenol A diglycidyl ether, tetramethylbisphenol A diglycidyl ether, tetrbromobisphenol A diglycidyl ether, bisphenol S diglycidyl ether, bisphenol F diglycidyl ether, hydrogenated bisphenol A diglycidyl ether, 1,2-cyclohexanedicarboxylic acid diglycidyl ester, 1,4-butanediol diglycidyl ether, 1,4-cyclohexane dimethanol diglycidyl ether, neopentyl glycol diglycidyl ether, dipropylene glycol diglycidyl ether, polypropylene glycol (400) diglycidyl ether, 1,6-hexanediol diglycidyl ether, dibromoneopentyl glycol diglycidyl ether, ethylene glycol diglycidyl ether, resorcinol diglycidyl ether, hydroquinone diglycidyl ether, 9,9-bis(4-hydroxy-3-methylphenyl)fluorene diglycidyl ether.

As one embodiment of the invention, suitable diols include but not limited to bisphenol A, tetramethylbisphenol A, tetrbromobisphenol A, bisphenol S, bisphenol F, hydrogenated bisphenol A, biphenyl-2,2'-diol, 1,3-propanediol, 1,4-butanediol, 1,5-Pentanediol, 1,4-cyclohexane dimethanol, neopentyl glycol, dipropylene glycol, polypropylene glycol (400), 1,6-hexanediol, dibromoneopentyl glycol, ethylene glycol, resorcinol, hydroquinone, 9,9-bis(4-hydroxy-3-methylphenyl)fluorene.

As another exemplary embodiment of the invention, a series of diglycidyl ether-based pigment dispersants are disclosed. The dispersants are produced by either reacting diglycidyl ethers with cardanol or reacting diols with cardanol glycidyl ether to give backbone structures (shown in figure 1), then alkoxylation is conducted to generate the hydrophilic groups, followed by sulfation.

As another exemplary embodiment of the invention, a series of diglycidyl ether-based pigment dispersants are disclosed. The dispersants are produced by either reacting diglycidyl ethers with cardanol or reacting diols with cardanol glycidyl ether to produce intermediates with backbone structures (shown in figure 1), then alkoxylation is conducted to generate the hydrophilic groups, followed by phosphate esterification.

As another exemplary embodiment of the invention, a series of diglycidyl ether-based pigment dispersants are disclosed. The dispersants are produced by either reacting diglycidyl ethers with cardanol or reacting diols with cardanol glycidyl ether to produce intermediates with backbone structures (shown in figure 1), then alkoxylation is conducted to generate the hydrophilic groups, followed by sulfosuccinate esterification.

As an exemplary embodiment, the weight percentage of the pigment dispersant is from 0.1% to 30%, preferably from 2% to 25%, more preferably from 4% to 20%, more preferably from 6% to 15%. As an exemplary embodiment, the molecular weight of the pigment dispersant is between 500g/mol and 20,000 g/mol, more preferably between 800 g/mol and 15,000 g/mol, more preferably between 1000 g/mol and 10,000 g/mol.

Component (C) may be solvents comprising water or water-soluble hydrotropic substances. Water used as component (C) to produce the pigment preparations is preferably used in the form of demineralized or distilled water. It is similarly possible to use drinking water (tap water) and/or water of natural origin. As an exemplary embodiment, the weight percentage of the solvent is from 0% to 90%, preferably from 10% to 80%, more preferably from 20% to 70%, more preferably from 30% to 60%.

Component (D) may be auxiliaries, such as, thickeners, humectants, wetting agents, preservatives, viscosity stabilizers, grinding assistants and fillers. Further customary additives are antisettling agents, photoprotectants, antioxidants, degassers/defilmers, foam-reducing agents, anitcaking agents and also viscosity and rheology improvers. Useful viscosity regulators include for example polyvinyl alcohol and cellulose derivatives. Water-soluble natural or manufactured resins and also polymers may similarly be included as filming or binding agents to enhance bonding strength and abrasion resistance. Useful pH regulators include organic or inorganic bases and acids. As an exemplary embodiment, the weight percentage of the auxiliary is from 0% to 30%, preferably from 5% to 25%, more preferably from 10% to 20%.

The present invention also provides a process for producing the pigment preparations or compositions of the present invention. The process includes the following steps: (1) providing component (B) of the invention; (2) mixing component (B) with components (C), optionally with one or more of components (D) to form a mixture; (3) introducing component (A) into the mixture to form a predispersion. The predispersion is subsequently, depending on the texture of component (A), finely dispersed or finely dissipated, with or without cooling, using a grinding or dispersing assembly. Grinding or dispersing assembly may include stirrers, dissolvers (sawtooth stirrers), rotor-stator mills, ball mills, stirred media mills such as sand and bead mills, high speed mixers, kneaders, roll stands or high performance bead mills. The fine dispersing or grinding of predispersion can take place at temperatures in the range from 0° C to 100° C, advantageously at a temperature between 10° C and 70° C, preferably at 20° C to 60° C. After the fine dispersing or grinding of the predispersion, the pigment preparation may be further diluted with water, preferably deionized or distilled water.

The pigment compositions of the present invention are useful for pigmentation and coloration of natural and synthetic materials of any kind, particularly of aqueous paints, emulsion and varnish colors (emulsion varnishes). The pigment preparations of the present invention are further useful for coloration of macro-molecular materials of any kind, for example of natural and synthetic fiber materials, preferably cellulose fibers, also for paper pulp coloration and laminate coloration. Further uses are the production of printing colors, for example textile printing colors, flexographic printing inks or intaglio printing inks, wallpaper colors, water-thinnable coatings, wood preservation systems, viscose dope dyeing systems, varnishes, including powder coatings, sausage casings, seed, fertilizers, glass, particularly glass bottles, and also of mass coloration of roof shingles, for coloration of renders, concrete, wood stains, colored pencil leads, felt tip pens, waxes, paraffins, graphics inks ball point pen pastes, chalks, washing and cleaning compositions, shoe care agents, latex products, abrasives, and also for coloration of plastics or high molecular weight materials of any kind. Examples of high molecular weight organic materials are cellulose ethers and esters, such as ethylcellulose, nitrocellulose, cellulose acetate or cellulose butyrate, natural resins or synthetic resins, such as addition polymerization resins or condensation resins, for example amino resins, particularly urea- and melamine-formaldehyde resins, alkyd resins, acrylic resins, phenolic resins, polycarbonates, polyolefins, such as polystyrene, polyvinyl chloride, polyethylene, polypropylene, polyacrylonitrile, polyacrylic esters, polyamides, polyurethanes or polyesters, rubber, casein, lattices, silicone, silicone resins, individually or in admixture.

The pigment compositions of the present invention are further useful for producing liquid printing inks for use in all conventional ink-jet printers, particularly for those based on the bubble jet or piezo process. These liquid printing inks can be used to print paper and also natural or synthetic fiber materials, foils and plastics. Additionally, the pigment preparation of the present invention can be used for printing various kinds of coated or uncoated substrate materials, for example for printing paper board, cardboard, wood and woodbase materials, metallic materials, semiconductor materials, ceramic materials, glasses, glass and ceramic fibers, inorganic materials of construction, concrete, leather, comestibles, cosmetics, skin and hair. The substrate material may be two-dimensionally planar or spatially extended, i.e., three-dimensionally configured, and may be printed or coated completely or only in parts.

### EXAMPLES

The following Examples and Comparative Examples are provided to help understand the present invention, and these Examples and Comparative Examples should not be construed as the limitation for the scope of the invention. Unless otherwise indicated, all parts and percentages are calculated by weight.

The raw materials used in Examples and Comparative Examples of the present invention are shown in Table 1.

**TABLE 1**

| Product Name | Chemical Property / Function | Supplier |
|---|---|---|
| D.E.R. 331 | Bisphenol-A based liquid epoxy resin | Olin Epoxy |
| NX 2024 | Cashew nutshell extract | Cardolite Corporation |
| UL 513 | Cashew nutshell liquid with epichlorohydrin | Cardolite Corporation |
| EPALLOY 5000 | Diepoxide of the cycloapliphatic alcohol, hydrogenated Bisphenol A | CVC Thermoset Specialties |
| ERISYS GE-21 | Epoxidized butanediol | CVC Thermoset Specialties |
| ERISYS GE-22 | Epoxidized cyclohexanedimethanol | CVC Thermoset Specialties |
| Sodium methoxide (30 % in methanol) | Sodium methoxide (30 % in methanol) | Alfa |
| 1,4-Butandiol | 1,4-Butandiol | SCR |
| Resorcinol diglycidyl ether | Resorcinol diglycidyl ether | SCR |
| Polyglykol 300 | Humectant | Clariant |
| Emulsogen LCN 407 | Wetting agent | Clariant |
| D-foam-R C331 | Foam-reducing agents | Clariant |
| Nipacide CI 15 HS | Preservative | Clariant |
| AMP-95 | pH Regulator | Dow |
| Hostaperm Green GNX 01 | Pigment Green 7 | Clariant |
| SJR 25 | Pigment Carbon Black 7 | Shanghai Jiaohua |
| Hansa Brilliant Yellow 2 GX 70 | Pigment Yellow 74 | Clariant |
| Hostaperm Red D3G | Pigment Red 254 | Clariant |
| Hostaperm Blue A2R | Pigment Blue 15:1 | Clariant |
| Hostaperm Violet RL Spec | Pigment Violet 23 | Clariant |
| Dispersogen 2774 | APEO-Dispersant | Clariant |

### Preparation of Intermediates

### Intermediate K

In a 1000 mL round bottom flask equipped with an overhead stirrer, a reflux condenser and a nitrogen inlet, 315 g of NX 2024, 202 g of D.E.R. 331 and 9.5 g of sodium methoxide (30 % in methanol) were mixed. After heating the reaction mixture to 90 °C, vacuum was applied to remove methanol for 1 hour. The reaction mixture was stirred at 140 °C under nitrogen for 4 hours to give a viscous brown liquid as the backbone intermediate.

### Intermediate L

In a 1000 mL round bottom flask equipped with an overhead stirrer, a reflux condenser and a nitrogen inlet, 313 g of NX 2024, 220 g of EPALLOY 5000 and 9.4 g of sodium methoxide (30 % in methanol) were mixed. After heating the reaction mixture to 90 °C, vacuum was applied to remove methanol for 1 hour. The reaction mixture was stirred at 140 °C under nitrogen for 4 hours to give a viscous brown liquid as the backbone intermediate.

### Intermediate M

In a 1000 mL round bottom flask equipped with an overhead stirrer, a reflux condenser and a nitrogen inlet, 352 g of NX 2024, 158 g of ERISYS GE 21 and 10.6 g of sodium methoxide (30 % in methanol) were mixed. After heating the reaction mixture to 90 °C, vacuum was applied to remove methanol for 1 hour. The reaction mixture was stirred at 140 °C under nitrogen for 4 hours to give a viscous brown liquid as the backbone intermediate.

### Intermediate N

In a 1000 mL round bottom flask equipped with an overhead stirrer, a reflux condenser and a nitrogen inlet, 415 g of NX 2024, 184 g of resorcinol diglycidyl ether and 12.5 g of sodium methoxide (30 % in methanol) were mixed. After heating the reaction mixture to 90 °C, vacuum was applied to remove methanol for 1 hour. The reaction mixture was stirred at 140 °C under nitrogen for 4 hours to give a viscous brown liquid as the backbone intermediate.

### Intermediate P

In a 1000 mL round bottom flask equipped with an overhead stirrer, a reflux condenser and a nitrogen inlet, 344 g of NX 2024, 184 g of ERISYS GE 22 and 10.3 g of sodium methoxide (30 % in methanol) were mixed. After heating the reaction mixture to 90 °C, vacuum was applied to remove methanol for 1 hour. The reaction mixture was stirred at 140 °C under nitrogen for 4 hours to give a viscous brown liquid as the backbone intermediate.

### Intermediate Q

In a 1000 mL round bottom flask equipped with an overhead stirrer, a reflux condenser and a nitrogen inlet, 556 g of UL513, 65 g of 1,4-butandiol and 13.1 g of sodium methoxide (30 % in methanol) were mixed. After heating the reaction mixture to 90 °C, vacuum was applied to remove methanol for 1 hour. The reaction mixture was stirred at 140 °C under nitrogen for 8 hours to give a viscous brown liquid as the backbone intermediate.

### Preparation of Dispersants

### Example 1

In a laboratory autoclave, 500 g of the backbone intermediate from Intermediate K was mixed with 595 g of ethylene oxide. The reaction mixture was polymerized under pressure for 5 hours at 140 °C to give a brown waxy solid as the dispersant product. The molecular weight was determined to be 1650 g/mol through the titration of hydroxyl value.

### Example 2

In a laboratory autoclave, 500 g of the backbone intermediate from Intermediate K was mixed with 1158 g of ethylene oxide. The reaction mixture was polymerized under pressure for 5 hours at 140 °C to give a brown waxy solid as the dispersant product. The molecular weight was determined to be 2538 g/mol through the titration of hydroxyl value.

### Example 3

In a laboratory autoclave, 500 g of the backbone intermediate from Intermediate K was mixed with 1487 g of ethylene oxide. The reaction mixture was polymerized under pressure for 5 hours at 140 °C to give a brown waxy solid as the dispersant product. The molecular weight was determined to be 2857 g/mol through the titration of hydroxyl value.

### Example 4

In a laboratory autoclave, 500 g of the backbone intermediate from Intermediate K was mixed with 1784 g of ethylene oxide. The reaction mixture was polymerized under pressure for 5 hours at 140 °C to give a brown waxy solid as the dispersant product. The molecular weight was determined to be 3336 g/mol through the titration of hydroxyl value.

### Example 5

In a laboratory autoclave, 500 g of the backbone intermediate from Intermediate Q was mixed with 1076 g of ethylene oxide. The reaction mixture was polymerized under pressure for 5 hours at 140 °C to give a brown waxy solid as the dispersant product. The molecular weight was determined to be 2561 g/mol through the titration of hydroxyl value.

### Example 6

In a laboratory autoclave, 500 g of the backbone intermediate from Intermediate Q was mixed with 1344 g of ethylene oxide. The reaction mixture was polymerized under pressure for 5 hours at 140 °C to give a brown waxy solid as the dispersant product. The molecular weight was determined to be 2889 g/mol through the titration of hydroxyl value.

### Example 7

In a 150 mL round bottom flask equipped with an overhead stirrer, a reflux condenser and a nitrogen inlet, 60 g of the product from Example 2 and 1.40 g of urea were mixed at 60 °C and stirred for 30 min under nitrogen. After raising temperature to 100 °C, 4.91 g of sulfamic acid was added and stirred at 150 °C for 2 hours under nitrogen. After cooling the reaction to 70 °C, 0.33 g of ammonia solution (25 %) was added to give the sulfated product.

### Example 8

In a 150 mL round bottom flask equipped with an overhead stirrer, a reflux condenser and a nitrogen inlet, 60 g of the product from Example 2 and 3.26 g of phosphorus pentoxide acid were mixed and stirred at 50 °C for 2 hours and 70 °C for 3 hours under nitrogen. After adding 0.41 g of water, and the reaction mixture was stirred for 1 hours to give the phosphate esterified product.

### Example 9

In a 150 mL round bottom flask equipped with an overhead stirrer, a reflux condenser and a nitrogen inlet, 60 g of the product from Example 2 was mixed with 4.72 g of maleic anhydride. The reaction mixture was stirred at 75 °C for 4 hour and 90 °C for 1 hour under nitrogen. A mixture of 5.03 g of sodium pyrosulfite, 1.93 g of NaOH and 46.81 g of water were added, and the mixture was stirred at 100 °C for 5 hours to give the sulfosuccinate esterified product (NV 60 %).

To test the performance of dispersants of in this invention, water-based pigment pastes were produced with various modified and unmodified products. For comparison, commercially available dispersants Dispersogen 2774 (et al.) were selected as comparison examples. The formula of the water-based pigment paste for Carbon Black is shown in table 2.

**TABLE 2**

| | |
|---|---|
| Dispersant (20%) | 24.00 g |
| Polyglykol 300 | 6.00 g |
| Emulsogen LCN 407 | 1.20 g |
| D-foam-R C331 | 0.12 g |
| Nipacide CI 15 HS | 0.12 g |
| DI Water | 4.50 g |
| AMP 95 | 0.06 g |
| SJR 25 | 16.00 g |
| Total | 52.00 g |

52 g of the mixture as shown above was mixed with 120 g of zirconia beads (diameter 1 mm) and the resulting mixture was dispersed through a Disperser LAU DAS200 for 1 hour. After filtrating, the viscosity and particle size of pigment pastes were determined through Thermo Scientific^{™} HAAKE^{™} MARS^{™} iQ Rotational Rheometer and Malvern Zetasizer Nano respectively.

To test the tinting strength in color paints, 0.40 g of the pigment paste were homogenized with 19.60 g of waterborne white dispersion (20 % of TiO₂ and 1 % of TiO₂) by simple manual stirring. The paints thus produced were drawn down as a 200-µm film on test card and dried at room temperature for 60 min. The application results of dispersants for carbon black, i.e.viscosity and particle size of pigment paste & tinting strength of color paint is shown in table 3. In the table, "Tinting Strength" stands for "tinting strength with white dispersion (20 % of TiO₂)".

**TABLE 3**

| Dispersant | Pigment paste | | Color Paint | |
|---|---|---|---|---|
| Examples | Viscosity(mPa·s) | Particle size (nm) | Tinting Strength | Tinting Strength |
| Example 1 | 404 | 148 | 99.3 % | 112.9 % |
| Example 2 | 698 | 150 | 101.8 % | 115.9 % |
| Example 3 | 972 | 150 | 104.4 % | 115.0 % |
| Example 4 | 1408 | 143 | 101.1 % | 115.4 % |
| Example 5 | 1099 | 193 | 98.2 % | 99.8 % |
| Example 6 | 905 | 161 | 99.4 % | 104.6% |
| Example 7 | 901 | 163 | 102.3 % | 114.0 % |
| Example 8 | 943 | 164 | 114.8 % | 137.4 % |
| Example 9 | 522 | 187 | 108.5 % | 127.9 % |
| Dispersogen 2774 | 288 | 274 | 100.0 % | 100.0 % |

The formula of the water-based pigment paste for pigment green is shown in table 4.

**TABLE 4**

| | |
|---|---|
| Dispersant (20%) | 7.20 g |
| Polyglykol 300 | 6.00 g |
| Emulsogen LCN 407 | 1.20 g |
| D-foam-R C331 | 0.30 g |
| Nipacide CI 15 HS | 0.12 g |
| DIWater | 21.06 g |
| AMP 95 | 0.06 g |
| Hostaperm GNX 01 | 24.00 g |
| Total | 60.00 g |

60 g of the mixture above was mixed with 120 g of zirconia beads (diameter 1 mm) and the resulting mixture was dispersed through a Disperser LAU DAS200 for 1 hour. After filtrating, the viscosity and particle size of pigment pastes were determined through Thermo Scientific^{™} HAAKE^{™} MARS^{™} iQ Rotational Rheometer and Malvern Zetasizer Nano respectively. The application results of dispersants for pigment green is shown in table 5.

**TABLE 5**

| Dispersant | Viscosity (mPa·s) | Particle size (nm) |
|---|---|---|
| Example 2 | 152 | 275 |
| Example 3 | 177 | 222 |
| Example 4 | 190 | 284 |
| Example 6 | 161 | 214 |
| Dispersogen 2774 | 114 | 318 |

This invention shows that the novel APEO-free dispersants produced by alkoxylated cardanol-diglycidyl ether-adduct gives promising results in pigment paste as well as in color coating.

### Application Examples

### Preparation of Dispersant Composition

The pigment, in the form of powder, was pasted up in deionized water together with the dispersants and the other auxiliary and then homogenized and predispersed using a dissolver (e.g. Dissolver DISPERMAT^{®} CN10 from VMA). Fine dispersion was subsequently effected using a bead mill (e.g. Dissolver DISPERMAT^{®} CN10 from VMA), with milling being carried out with zirconium oxide beads of size d=1 mm, accompanied by cooling for 1 hour. Thereafter, the grinding media separated off through filtration and the pigment preparation isolated.

Viscosity was determined using a cone-and-plate viscometer (Thermo Scientific^{™} HAAKE^{™} MARS^{™} iQ Rotational Rheometer) at 23 °C. (titanium cone: Ø60mm, 1), the relationship between viscosity and shear rate in a range between 0 and 200 s⁻¹ being investigated. Viscosities were measured at a shear rate of 60 s⁻¹. To evaluate the storage stability of the dispersions, viscosity was measured directly after production of the preparation and also after 28 days stored at 50° C.

The pigment preparations or compositions described in the below examples which were produced by the method described above, the following constituents being used in the stated amounts such that 100 parts of the respective pigment preparation or composition are formed.

### Application Example 1

| | |
|---|---|
| 40 parts | Pigment Carbon Black 7 |
| 10 parts | Dispersant based on Example 2 |
| 10 parts | Humectant |
| 2 parts | Wetting agent |
| 0.5 part | Foam-reducing agent |
| 0.2 part | Preservative |
| 0.1 part | pH Regulator |
| 37.2 parts | Water |

Viscosity in the as-produced state is 1901 mPa·s. The pigment preparation or composition prove to be readily flowable and storage stable since it is still very readily flowable after 28 days stored at 50° C.

### Application Example 2

| | |
|---|---|
| 50 parts | Pigment Green 7 |
| 8 parts | Dispersant based on Example 9 |
| 10 parts | Humectant |
| 2 parts | Wetting agent |
| 0.5 part | Foam-reducing agent |
| 0.2 part | Preservative |
| 0.1 part | pH Regulator |
| 29.2 parts | Water |

Viscosity in the as-produced state is 839 mPa·s. The preparation proves to be readily flowable and storage stable since it is still very readily flowable after 28 days stored at 50° C.

### Application Example 3

| | |
|---|---|
| 50 parts | Pigment Blue 15:1 |
| 8 parts | Dispersant based on Example 1 |
| 10 parts | Humectant |
| 2 parts | Wetting agent |
| 0.5 part | Foam-reducing agent |
| 0.2 part | Preservative |
| 0.1 part | pH Regulator |
| 29.2 parts | Water |

Viscosity in the as-produced state is 762 mPa·s. The preparation proves to be readily flowable and storage stable since it is still very readily flowable after 28 days stored at 50° C.

### Application Example 4

| | |
|---|---|
| 45 parts | Pigment Red 254 |
| 8 parts | Dispersant based on Example 3 |
| 10 parts | Humectant |
| 2 parts | Wetting agent |
| 0.5 part | Foam-reducing agent |
| 0.2 part | Preservative |
| 0.1 part | pH Regul ator |
| 34.2 parts | Water |

Viscosity in the as-produced state is 1011 mPa·s. The preparation proves to be readily flowable and storage stable since it is still very readily flowable after 28 days stored at 50° C.

### Application Example 5

| | |
|---|---|
| 35 parts | Pigment Violet 23 |
| 9 parts | Dispersant based on Example 6 |
| 10 parts | Humectant |
| 2 parts | Wetting agent |
| 0.5 part | Foam-reducing agent |
| 0.2 part | Preservative |
| 0.1 part | pH Regul ator |
| 43.2 parts | Water |

Viscosity in the as-produced state is 213 mPa·s. The preparation proves to be readily flowable and storage stable since it is still very readily flowable after 28 days stored at 50° C.

### Application Example 6

| | |
|---|---|
| 45 parts | Pigment Yellow 74 |
| 8 parts | Dispersant based on Example 7 |
| 10 parts | Humectant |
| 2 parts | Wetting agent |
| 0.5 part | Foam-reducing agent |
| 0.2 part | Preservative |
| 0.1 part | pH Regul ator |
| 34.2 parts | Water |

Viscosity in the as-produced state is 576 mPa·s. The preparation or composition proves to be readily flowable and storage stable since it is still very readily flowable after 28 days stored at 50° C.

## Claims

1. A pigment dispersant of the general formula (I): 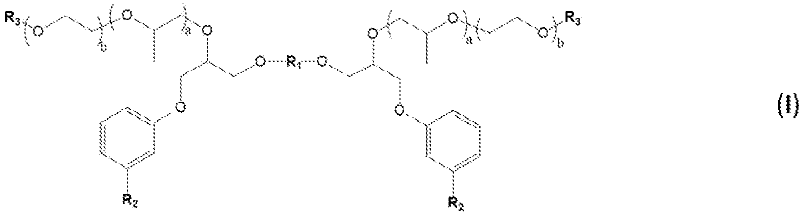
wherein R₁ represents an aromatic or araliphatic or aliphatic hydrocarbyl radical;
R₂ represents aliphatic hydrocarbyl radical;
a is a number from 0 to 20;
b is a number from 5 to 50; and
R₃ represents one of following atoms or groups: hydrogen, sulfuric acid group, phosphate group, or sulfosuccinate group.

2. The pigment dispersant of claim 1, wherein b is a number from 10 to 50, preferably b is a number from 10 to 40, more preferably b is a number from 10 to 25.

3. The pigment dispersant of claim 1, wherein a is a number from 0 to 20 and b is a number from 10 to 30.

4. The pigment dispersant of claim 1, wherein R₂ is of the formula: C₁₅H₃₁₋ₘ, wherein m is 0, 2, 4 or 6, or R₂ is alkyl radical of the formula: CₙH₂ₙ₊₁, or R₂ is aliphatic hydrocarbyl radical of the formula CₙH₂ₙ₋₁ or CₙH₂ₙ₋₃, or CₙH₂ₙ₋₅, wherein n is 4 to 20.

5. The pigment dispersant of claim 1, wherein R₃ is hydrogen, a is a number from 0 to 10, and b is a number from 10 to 40.

6. The pigment dispersant of claim 1, wherein the molecular weight of the pigment dispersant is between 500 g/mol and 20,000 g/mol, more preferably between 1000 g/mol and 15,000 g/mol, more preferably between 2000 g/mol and 10,000 g/mol.

7. The pigment dispersant of claim 1, wherein R₁ is an aromatic or araliphatic or aliphatic hydrocarbyl radical having 2 to 60 carbon atoms optionally containing one or more of the heteroatoms N, O and S.

8. A pigment composition comprising:
(A) at least one organic base pigment; and
(B) at least one pigment dispersant of the general formula (I): 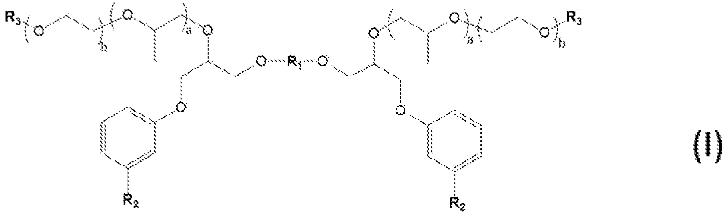
wherein R₁ is an aromatic or araliphatic or aliphatic hydrocarbyl radical;
R₂ is aliphatic hydrocarbyl radical of the formula: C₁₅H₃₁₋ₘ, in which m is 0, 2, 4 or 6;
a is number from 0 to 20;
b is number from 5 to 50; and
R₃ represents one of following atoms or groups: hydrogen, sulfuric acid group, phosphate group, or sulfosuccinate group;
(C) at least one solvent comprising water; and
(D) optional auxiliary.

9. The pigment dispersant of claim 8, wherein a is a number from 0 to 20 and b is a number from 10 to 30.

10. The pigment dispersant of claim 8, wherein R₃ is hydrogen, a is a number from 0 to 10, and b is a number from 10 to 40.

11. The pigment dispersant of claim 8, wherein the molecular weight of the pigment dispersant is between 500g/mol and 20,000 g/mol, preferably the molecular weight of the pigment dispersant is between 1000 g/mol and 5000 g/mol.

12. The pigment dispersant of claim 8, wherein R₁ is an aromatic or araliphatic or aliphatic hydrocarbyl radical having 2 to 60 carbon atoms optionally containing one or more of the heteroatoms N, O and S.

13. The pigment composition of claim 8, wherein the pigment composition comprises:
(A) 1% to 60% by weight of said at least one organic base pigment,
(B) 0.1% to 30% by weight of said at least one pigment dispersant,
(C) 0 to 90% by weight of at least one solvent comprising water, and
(D) 0 to 30% by weight of at least one auxiliary, the weight percentages of the respective components being based on the total weight of the pigment composition.

14. The pigment composition of claim 13, wherein the pigment composition comprises 0.5% to 15% by weight of said at least one pigment dispersant.

15. The pigment composition of claim 13, wherein the weight percentage of said at least organic base pigment is from 5% to 50%, more preferably from 10% to 50%, most preferably from 20% to 45%.

16. The pigment composition of claim 13, wherein the weight percentage of said at least one auxiliary is from 0% to 30%, preferably from 5% to 25%, more preferably from 10% to 20%.

17. The pigment composition of claim 13, wherein the weight percentage of said at least one solvent is from 0% to 90%, preferably from 10% to 80%, more preferably from 20% to 70%, more preferably from 30% to 60%.

18. The pigment composition of one of claims 8-17, wherein said auxiliary is selected from the group consisting of water, fillers, flame retardants, preservatives, photoprotectants, pigmentary and nonpigmentary dispersants, surfactants, antioxidants, foam-reducing agents, resins, humectants, wetting agents, preservatives, antistats and pH regulators, each based on the total weight of the pigment composition.

19. The pigment composition of one of claims 8-18, wherein said at least one organic base pigment is selected from one of the group consisting of monoazo, disazo, laked azo, beta.-naphthol, Naphthol AS, benzimidazolone, disazo condensation, azo metal complex pigment, carbon black or a polycyclic pigment selected from the group consisting of phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments.

20. A method for producing a pigment composition comprising the step of mixing at least one pigment dispersant as claimed in claim 1 with at least one organic pigment during a preparation process for the at least one organic pigment to form the pigment composition.

21. The method of claim 20, wherein the mixing step further comprises mixing at least one auxiliary with said at least one organic pigment and said at least one pigment dispersant.

22. The method of claim 20, wherein said at least one organic pigment is selected from one of the group consisting of monoazo, disazo, laked azo, β-naphthol, Naphthol AS, benzimidazolone, disazo condensation, azo metal complex pigment, carbon black or a polycyclic pigment selected from the group consisting of phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments.

23. A pigmented, natural or synthetic high molecular mass organic material comprising the pigment composition of one of claims 8-19, wherein the natural or synthetic high molecular mass organic material is selected from the group consisting of plastics, resins, varnishes, paints, electrophotographic toners and developers, and inks.

## Patentansprüche

1. Pigmentdispergiermittel der allgemeinen Formel (I): 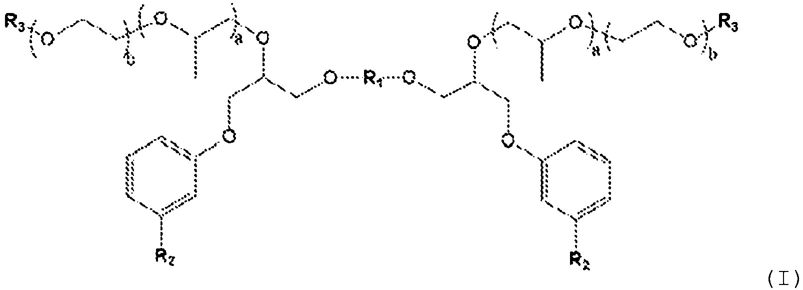
wobei R₁ für einen aromatischen oder araliphatischen oder aliphatischen Hydrocarbylrest steht;
R₂ für einen aliphatischen Hydrocarbylrest steht;
a eine Zahl von 0 bis 20 ist;
b eine Zahl von 5 bis 50 ist; und
R₃ für eines der folgenden Atome oder eine der folgenden Gruppen steht: Wasserstoff, Schwefelsäuregruppe, Phosphatgruppe oder Sulfosuccinatgruppe.

2. Pigmentdispergiermittel nach Anspruch 1, wobei b eine Zahl von 10 bis 50 ist, vorzugsweise b eine Zahl von 10 bis 40 ist, weiter bevorzugt b eine Zahl von 10 bis 25 ist.

3. Pigmentdispergiermittel nach Anspruch 1, wobei a eine Zahl von 0 bis 20 ist und b eine Zahl von 10 bis 30 ist.

4. Pigmentdispergiermittel nach Anspruch 1, wobei R₂ die folgende Formel aufweist: C₁₅H₃₁₋ₘ, wobei m für 0, 2, 4 oder 6 steht, oder R₂ ein Alkylrest der folgenden Formel ist: CₙH₂ₙ₊₁ oder R₂ ein aliphatischer Hydrocarbylrest der Formel CₙH₂ₙ₋₁ oder CₙH₂ₙ₋₃ oder CₙH₂ₙ₋₅ ist, wobei n 4 bis 20 ist.

5. Pigmentdispergiermittel nach Anspruch 1, wobei R₃ Wasserstoff ist, a eine Zahl von 0 bis 10 ist und b eine Zahl von 10 bis 40 ist.

6. Pigmentdispergiermittel nach Anspruch 1, wobei das Molekulargewicht des Pigmentdispergiermittels zwischen 500 g/mol und 20.000 g/mol, weiter bevorzugt zwischen 1000 g/mol und 15.000 g/mol, weiter bevorzugt zwischen 2000 g/mol und 10.000 g/mol, liegt.

7. Pigmentdispergiermittel nach Anspruch 1, wobei R₁ ein aromatischer oder araliphatischer oder aliphatischer Hydrocarbylrest mit 2 bis 60 Kohlenstoffatomen ist, der gegebenenfalls eines oder mehrere der Heteroatome N, O und S enthält.

8. Pigmentzusammensetzung, umfassend:
(A) mindestens ein organisches Basispigment; und
(B) mindestens ein Pigmentdispergiermittel der allgemeinen Formel (I): 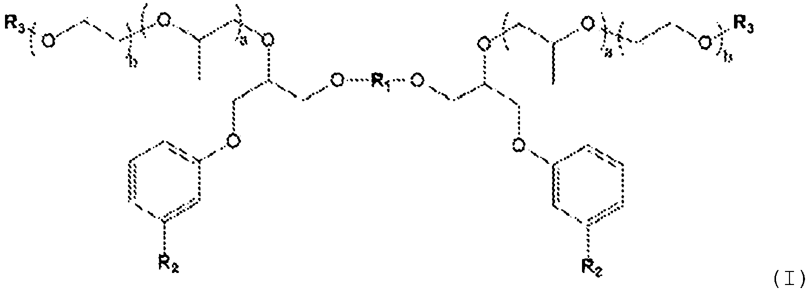
wobei R₁ ein aromatischer oder araliphatischer oder aliphatischer Hydrocarbylrest ist;
R₂ ein aliphatischer Kohlenwasserstoffrest der folgenden Formel ist: C₁₅H₃₁₋ₘ, wobei m 0, 2, 4 oder 6 ist;
a eine Zahl von 0 bis 20 ist;
b eine Zahl von 5 bis 50 ist; und
R₃ für eines der folgenden Atome oder eine der folgenden Gruppen steht: Wasserstoff, Schwefelsäuregruppe, Phosphatgruppe oder Sulfosuccinatgruppe;
(C) mindestens ein Lösungsmittel, das Wasser umfasst; und
(D) fakultative Hilfsmittel.

9. Pigmentdispergiermittel nach Anspruch 8, wobei a eine Zahl von 0 bis 20 ist und b eine Zahl von 10 bis 30 ist.

10. Pigmentdispergiermittel nach Anspruch 8, wobei R₃ Wasserstoff ist, a eine Zahl von 0 bis 10 ist und b eine Zahl von 10 bis 40 ist.

11. Pigmentdispergiermittel nach Anspruch 8, wobei das Molekulargewicht des Pigmentdispergiermittels zwischen 500 g/mol und 20.000 g/mol liegt, vorzugsweise das Molekulargewicht des Pigmentdispergiermittels zwischen 1000 g/mol und 5000 g/mol liegt.

12. Pigmentdispergiermittel nach Anspruch 8, wobei R₁ ein aromatischer oder araliphatischer oder aliphatischer Hydrocarbylrest mit 2 bis 60 Kohlenstoffatomen ist, der gegebenenfalls eines oder mehrere der Heteroatome N, O und S enthält.

13. Pigmentzusammensetzung nach Anspruch 8, wobei die Pigmentzusammensetzung Folgendes umfasst:
(A) 1 bis 60 Gew.-% des mindestens einen organischen Basispigments,
(B) 0,1 bis 30 Gew.-% des mindestens einen Pigmentdispergiermittels,
(C) 0 bis 90 Gew.-% mindestens eines wasserhaltigen Lösungsmittels und
(D) 0 bis 30 Gew.-% mindestens eines Hilfsmittels, wobei sich die Gewichtsprozentanteile der jeweiligen Komponenten auf das Gesamtgewicht der Pigmentzusammensetzung beziehen.

14. Pigmentzusammensetzung nach Anspruch 13, wobei die Pigmentzusammensetzung 0,5 Gew.-% bis 15 Gew.-% des mindestens einen Pigmentdispergiermittels umfasst.

15. Pigmentzusammensetzung nach Anspruch 13, wobei der Gewichtsprozentanteil des mindestens organischen Basispigments 5 % bis 50 %, weiter bevorzugt 10 % bis 50 %, ganz besonders bevorzugt 20 % bis 45 %, beträgt.

16. Pigmentzusammensetzung nach Anspruch 13, wobei der Gewichtsprozentanteil des mindestens einen Hilfsmittels 0 % bis 30 %, vorzugsweise 5 % bis 25 %, weiter bevorzugt 10 % bis 20 %, beträgt.

17. Pigmentzusammensetzung nach Anspruch 13, wobei der Gewichtsprozentanteil des mindestens einen Lösungsmittels 0 % bis 90 %, vorzugsweise 10 % bis 80 %, weiter bevorzugt 20 % bis 70 %, weiter bevorzugt 30 % bis 60 %, beträgt.

18. Pigmentzusammensetzung nach einem der Ansprüche 8-17, wobei der Hilfsstoff aus der Gruppe bestehend aus Wasser, Füllstoffen, Flammschutzmitteln, Konservierungsmitteln, Lichtschutzmitteln, pigmentären und nichtpigmentären Dispergiermitteln, Tensiden, Antioxidantien, schaumreduzierenden Mitteln, Harzen, Feuchthaltemitteln, Netzmitteln, Konservierungsmitteln, Antistatika und pH-Reglern ausgewählt ist, jeweils bezogen auf das Gesamtgewicht der Pigmentzusammensetzung.

19. Pigmentzusammensetzung nach einem der Ansprüche 8-18, wobei das mindestens eine organische Basispigment aus einem der Gruppe bestehend aus Monoazo-, Disazo-, verlackten Azo-, beta-Naphthol-, Naphthol-AS-, Benzimidazolon-, Disazokondensations-, Azometallkomplexpigmenten, Ruß oder einem polycyclischen Pigment, das aus der Gruppe bestehend aus Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmenten ausgewählt ist, ausgewählt ist.

20. Verfahren zur Herstellung einer Pigmentzusammensetzung, umfassend den Schritt des Mischens mindestens eines Pigmentdispergiermittels nach Anspruch 1 mit mindestens einem organischen Pigment während eines Herstellungsprozesses für das mindestens eine organische Pigment zur Bildung der Pigmentzusammensetzung.

21. Verfahren nach Anspruch 20, wobei der Mischschritt ferner das Mischen mindestens eines Hilfsmittels mit dem mindestens einen organischen Pigment und dem mindestens einen Pigmentdispergiermittel umfasst.

22. Verfahren nach Anspruch 20, wobei das mindestens eine organische Pigment aus einem der Gruppe bestehend aus Monoazo-, Disazo-, verlackten Azo-, β-Naphthol-, Naphthol-AS-, Benzimidazolon-, Disazokondensations-, Azometallkomplexpigmenten, Ruß oder einem polycyclischen Pigment, das aus der Gruppe bestehend aus Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmenten ausgewählt ist, ausgewählt ist.

23. Pigmentiertes, natürliches oder synthetisches hochmolekulares organisches Material, umfassend die Pigmentzusammensetzung nach einem der Ansprüche 8-19, wobei das natürliche oder synthetische hochmolekulare organische Material aus der Gruppe bestehend aus Kunststoffen, Harzen, Lacken, Anstrichfarben, elektrophotographischen Tonern und Entwicklern, Tinten und Druckfarben ausgewählt ist.

## Revendications

1. Dispersant de pigment de formule générale (I) : 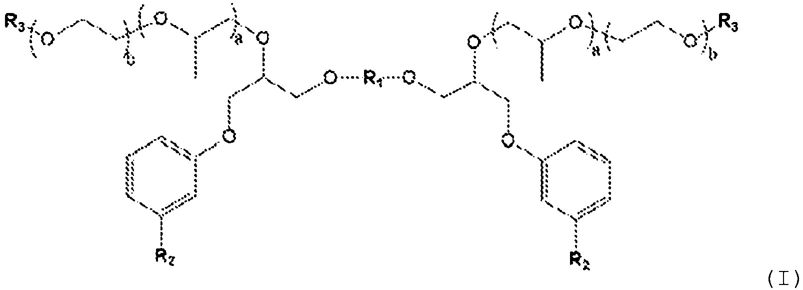
dans laquelle R₁ représente un radical hydrocarbyle aromatique ou araliphatique ou aliphatique ;
R₂ représente un radical hydrocarbyle aliphatique ;
a est un nombre de 0 à 20 ;
b est un nombre de 5 à 50 ; et
R₃ représente l'un des atomes ou groupes suivants : hydrogène, groupe acide sulfurique, groupe phosphate, ou groupe sulfosuccinate.

2. Dispersant de pigment selon la revendication 1, dans lequel b est un nombre de 10 à 50, de préférence b est un nombre de 10 à 40, plus préférablement b est un nombre de 10 à 25.

3. Dispersant de pigment selon la revendication 1, dans lequel a est un nombre de 0 à 20 et b est un nombre de 10 à 30.

4. Dispersant de pigment selon la revendication 1, dans lequel R₂ est de la formule : C₁₅H₃₁₋ₘ, dans laquelle m est 0, 2, 4 ou 6, ou R₂ est un radical alkyle de formule : CₙH₂ₙ₊₁, ou R₂ est un radical hydrocarbyle aliphatique de formule CₙH₂ₙ₋₁ ou CₙH₂ₙ₋₃, ou CₙH₂ₙ₋₅, dans laquelle n est 4 à 20.

5. Dispersant de pigment selon la revendication 1, dans lequel R₃ est hydrogène, a est un nombre de 0 à 10 et b est un nombre de 10 à 40.

6. Dispersant de pigment selon la revendication 1, dans lequel le poids moléculaire du dispersant de pigment est compris entre 500 g/mole et 20 000 g/mole, plus préférablement entre 1 000 g/mole et 15 000 g/mole, plus préférablement entre 2 000 g/mole et 10 000 g/mole.

7. Dispersant de pigment selon la revendication 1, dans lequel R₁ est un radical hydrocarbyle aromatique ou araliphatique ou aliphatique ayant 2 à 60 atomes de carbone contenant éventuellement un ou plusieurs des hétéroatomes N, O et S.

8. Composition de pigment comprenant :
(A) au moins un pigment de base organique ; et
(B) au moins un dispersant de pigment de la formule générale (I) : 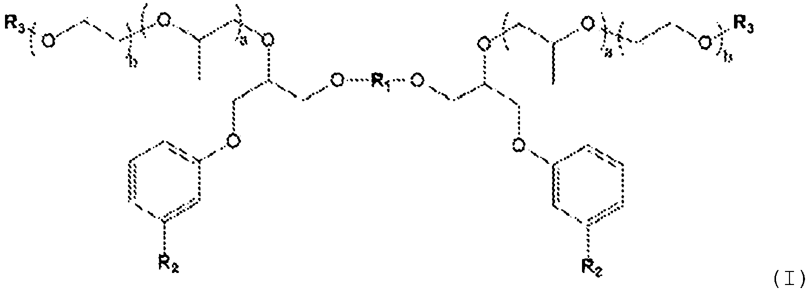
dans laquelle R₁ est un radical hydrocarbyle aromatique ou araliphatique ou aliphatique ;
R₂ est un radical hydrocarbyle aliphatique de formule : C₁₅H₃₁₋ₘ, dans laquelle m est 0, 2, 4 ou 6 ;
a est un nombre de 0 à 20 ;
b est un nombre de 5 à 50 ; et
R₃ représente l'un des atomes ou groupes suivants : hydrogène, groupe acide sulfurique, groupe phosphate ou groupe sulfosuccinate ;
(C) au moins un solvant comprenant de l'eau ; et
(D) un auxiliaire éventuel.

9. Dispersant de pigment selon la revendication 8, dans lequel a est un nombre de 0 à 20 et b est un nombre de 10 à 30.

10. Dispersant de pigment selon la revendication 8, dans lequel R₃ est hydrogène, a est un nombre de 0 à 10 et b est un nombre de 10 à 40.

11. Dispersant de pigment selon la revendication 8, dans lequel le poids moléculaire du dispersant de pigment est compris entre 500 g/mole et 20 000 g/mole, de préférence le poids moléculaire du dispersant de pigment est compris entre 1 000 g/mole et 5 000 g/mole.

12. Dispersant de pigment selon la revendication 8, dans lequel R₁ est un radical hydrocarbyle aromatique ou araliphatique ou aliphatique ayant 2 à 60 atomes de carbone contenant éventuellement un ou plusieurs des hétéroatomes N, O et S.

13. Composition de pigment selon la revendication 8, dans laquelle la composition de pigment comprend :
(A) 1 % à 60 % en poids dudit au moins un pigment de base organique,
(B) 0,1 % à 30 % en poids dudit au moins un dispersant de pigment,
(C) 0 à 90 % en poids d'au moins un solvant comprenant de l'eau, et
(D) 0 à 30 % en poids d'au moins un auxiliaire, les pourcentages en poids des composants respectifs étant basés sur le poids total de la composition de pigment.

14. Composition de pigment selon la revendication 13, dans laquelle la composition de pigment comprend 0,5 % à 15 % en poids dudit au moins un dispersant de pigment.

15. Composition de pigment selon la revendication 13, dans laquelle le pourcentage en poids dudit au moins pigment de base organique est de 5 % à 50 %, plus préférablement de 10 % à 50 %, le plus préférablement de 20 % à 45 %.

16. Composition de pigment selon la revendication 13, dans laquelle le pourcentage en poids dudit au moins un auxiliaire est de 0 % à 30 %, de préférence de 5 % à 25 %, plus préférablement de 10 % à 20 %.

17. Composition de pigment selon la revendication 13, dans laquelle le pourcentage en poids dudit au moins un solvant est de 0 % à 90 %, de préférence de 10 % à 80 %, plus préférablement de 20 % à 70 %, plus préférablement de 30 % à 60 %.

18. Composition de pigment selon l'une des revendications 8 à 17, dans laquelle ledit auxiliaire est choisi dans le groupe constitué par l'eau, les charges, les retardateurs de flamme, les conservateurs, les photoprotecteurs, les dispersants pigmentaires et non pigmentaires, les tensioactifs, les antioxydants, les agents de réduction de mousse, les résines, les humectants, les agents mouillants, les conservateurs, les antistatiques et les régulateurs de pH, chacun basé sur le poids total de la composition de pigment.

19. Composition de pigment selon l'une des revendications 8 à 18, dans laquelle ledit au moins un pigment de base organique est choisi dans le groupe constitué par les pigments monoazoïques, disazoïques, azoïques laqués, bêta-naphtol, naphtol AS, benzimidazolone, de condensation disazoïque, de complexe métallique azoïque, de noir de carbone ou un pigment polycyclique choisi parmi les pigments de phtalocyanine, quinacridone, pérylène, périnone, thioindigo, anthanthrone, anthraquinone, flavanthrone, indanthrone, isoviolanthrone, pyranthrone, dioxazine, quinophtalone, isoindolinone, isoindoline et dicétopyrrolopyrrole.

20. Procédé de production d'une composition de pigment comprenant l'étape de mélange d'au moins un dispersant de pigment selon la revendication 1 avec au moins un pigment organique pendant un processus de préparation pour le au moins un pigment organique pour former la composition de pigment.

21. Procédé selon la revendication 20, dans lequel l'étape de mélange comprend en outre le mélange d'au moins un auxiliaire avec ledit au moins un pigment organique et ledit au moins un dispersant de pigment.

22. Procédé selon la revendication 20, dans lequel ledit au moins un pigment organique est choisi dans le groupe constitué par les pigments monoazoïques, disazoïques, azoïques laqués, β-naphtol, naphtol AS, benzimidazolone, de condensation disazoïque, de complexe métallique azoïque, de noir de carbone ou un pigment polycyclique choisi parmi les pigments de phtalocyanine, quinacridone, pérylène, périnone, thioindigo, anthanthrone, anthraquinone, flavanthrone, indanthrone, isoviolanthrone, pyranthrone, dioxazine, quinophtalone, isoindolinone, isoindoline et dicétopyrrolopyrrole.

23. Matière organique de masse moléculaire élevée, naturelle ou synthétique, pigmentée, comprenant la composition de pigment selon l'une des revendications 8 à 19, dans laquelle la matière organique de masse moléculaire élevée naturelle ou synthétique est choisie dans le groupe constitué par les matières plastiques, les résines, les vernis, les peintures, les toners et révélateurs électrophotographiques, et les encres.
